Europäisches Patentamt

European Patent Office

Office européen des brevets

(11) Publication number: **0 214 533**
A2

# EUROPEAN PATENT APPLICATION

(21) Application number: 86111620.0

(22) Date of filing: 22.08.86

(51) Int. Cl.⁴: **C08G 18/66** , C08J 9/34 ,
C08K 3/34 , C08L 75/04

(30) Priority: 03.09.85 JP 195600/85

(43) Date of publication of application:
18.03.87 Bulletin 87/12

(84) Designated Contracting States:
DE FR GB IT SE

(71) Applicant: SUMITOMO BAYER URETHANE
CO.LTD:
13-26 3-Chome Kukuchi
Amagasaki Hyogo Pref.(JP)

(72) Inventor: Nakamura, Masafumi
1-918, 17, 2-Chome Kasuga
Suita Osaka, Pref.(JP)

(74) Representative: Weber, Gerhard, Dr. et al
c/o BAYER AG Konzernverwaltung RP
Patentabteilung
D-5090 Leverkusen, Bayerwerk(DE)

(54) Process for the production of polyurethane elastomer mouldings.

(57) A new process for the production of polyurethane elastomer mouldings having a compact surface skin and a density of from 0,8 to 1,4 g/cm³ by reacting a reaction mixture comprising

a) a polyisocyanate component,

b) organic compounds containing at least two isocanate-reactive groups and having a molecular weight of from 800 to 12,000,

c) organic compounds containing at least two isocyanate-reactive groups and having a molecular weight of from 62 to 500,

d) inorganic reinforcing materials, and optionally,

e) further additives and auxiliaries in closed moulds following the reaction injection method, wherein mica having a weight-average flake diameter of less than 50 μm is used as component d) or as a part of component d).

## Process for the production of polyurethane elastomer mouldings

The present invention relates to a process for the production of polyurethane elastomer mouldings having a compact surface skin and a density of from 0,8 to 1,4 g/cm³ by reacting polyurethane raw materials in closed moulds following the reaction injection method, wherein finely divided mica is used as reinforcing agent.

Polyurethane resin mouldings produced by the reaction injection moulding processs are used for car exterior parts such as bumper, spoiler and so on, or interior parts such as steering wheels. In case of exterior parts, which are put on steel structures, self-supporting stiffness of resin-mouldings is an important factor so that glass fiber reinforced resin mouldings or the like are positively used.

Reaction injection moulding processes are predominantly applied for producing polyurethane resin mouldings. The details thereof are described in the Japanese Patent Laying-open No. Sho 51-119796, Sho 52-142797, US-A 4 218 543, EP-A-17 928 or EP-A-44 481.

In these processes inorganic reinforcing materials such as glassfibre, rockwool, glassflakes and the like are usually used. However, these reinforcing materials exhibit several disadvantages. Fibrous reinforcing materials are often orientated in the direction of the flow of the polyurethane forming reactants so that the reinforcement in perpendicular direction to the flow is not fully accomplished. In order to improve such orientation problems it has been tried to shorten the length of the fibres in an attempt to restrain their orientation and to minimize the undesirable effect. The consequence thereof is, however, that the reinforcement effect is lowered. Flaky reinforcing materials such as glassflakes are orientated along the inner surface of the mould so that the isotropy of the mechanical properties is diminished. Furthermore, the reinforcing effect of such flaky materials is often insufficient so that a considerable amount of such flakes is required with the consequence that the mechanical properties of the reinforced mouldings, especially the elongation and impact strength, are considerably decreased.

Besides, plastic mouldings reinforced by conventional reinforcing materials often show a rough surface attributable to the reinforcing materials incorporated and such surface quality is not acceptable. Coatings and paintings are able to improve surface quality but it is difficult to eliminate such surface defects sufficiently and costs for such surface finishing are very high.

Inorganic reinforcing materials are admixed with the raw materials for the manufacture of the polyurethanes, usually with the polyol component. As the density of such materials is high, these materials usually precipitate during storage of the polyol. Formulated raw material components are stirred so as to prevent the deposition of reinforcing materials, however it is very difficult to disperse again reinforcing materials homogeneously once they have precipitated.

It was therefore the object of the invention to provide a new process for the production of reinforced high-density polyurethane mouldings which does not display these disadvantages.

This object was accomplished in accordance with the present invention by using finely divided mica as reinforcing agent.

The use of finely divided mica as additive in polyurethane formulations is already known from British Patent 801 070. However, according to this prior art publication mica is used as additive in a process for the production of polyurethane foams to eliminate the tendency to shrink and to eliminate sponge collapse. It goes without saying that such object is completely different from the object of the present invention.

The present invention is directed to a process for the production of polyurethane elastomer mouldings having a compact surface skin and a density of from 0,8 to 1,4 g/cm³ by reacting a reaction mixture comprising

a) a polyisocyanate component,

b) organic compounds containing at least two isocyanate-reactive groups and having a molecular weight of from 800 to 12,000,

c) organic compounds containing at least two isocyanate-reactive groups and having a molecular weight of from 62 to 500,

d) inorganic reinforcing materials, and optionally,

e) further additives and auxiliaries known in polyurethane chemistry in closed moulds following the reaction injection method, characterised in that mica having a weight-average flake diameter of less than 50 μm is used as component d) or as a part of component d).

The present invention is also directed to the mouldings obtained in accordance with this process.

Component a) may consist of any organic polyisocyanate known in polyurethane chemistry or any mixture of such polyisocyanates which are liquid at room temperature. Suitable polyisocyanates are e.g. hexamethylene diisocyanate, isophorone diisocyanate, 2,4-and/or 2,6-diisocyanatotoluene and most preferably polyisocyanates based on 4,4'-diisocyanato diphenylmethane, e.g. those which are mentioned in US-patent 4 218 543, column 7, line 8 to 28, such as for example the phosgenation product of aniline formaldehyde condensation products, liquid polyisocyanate having urethane groups obtained by reacting 1 mol of 4,4'-diisocyanato diphenylmethane with from 0,05 to 0,3 mols of low molecular weight diols or triols, preferably with propyleneglycols having a molecuar weight below 700, diisocyanates having carbodiimide and/or urethoneimine groups based on 4,4'-diisocyanato diphenylmethane or any other polyisocyanate mixture which is liquid at room temperature and which contains 4,4'-diisocyanato diphenylmethane in an amount of at least 30, preferably of at least 50% by weight.

The compounds used as component b) are organic compounds containing at least 2, preferably 2 -4 isocyanate-reactive groups such as primary and/or secondary hydroxyl groups and/or primary and/or secondary aliphatically and/or aromatically bound amino groups. Mixtures of different such compounds may also be used. The compounds used as components b) have a - (average) molecular weight of from 800 to 12 000, preferably of from 3 000 to 8 000. Most preferably polyetherpolyols which correspond to these definitions are used which contain predominant amounts of primary hydroxyl groups (at least 50%, preferably at least 70% of all hydroxyl groups). Compounds which may be used as component b) are e.g. disclosed in US Patent 4 218 543, column 7, line 29 -column 9, line 25.

The compounds used as component c) in the process of the invention comprise any organic compound having at least 2 isocyanate-reactive groups and having a molecular weight of from 62 - 500. Preferably component c) consists of polyhydroxyl compounds which correspond to these definitions and which have from 2 to 4 primary or secondary hydroxyl groups, aromatic diamines, which carry alkyl substituents in at least one ortho-position to each of the amino groups or of mixtures of such compounds. Suitable polyols which may be used as component c) or as part of component c) are, for example, ethyleneglycol, propyleneglycol, diethyleneglycol, dipropyleneglycol, trimethylolpropane, glycerol, low molecular weight polyether polyols such as the propoxylation products of 2,4- and/or 2,6-diaminotoluene having a molecular weight within the above range or any mixture thereof. Suitable aromatic diamines which may be used as component c) or as a part of component c) are for example, those which are disclosed in US Patent 4 218 543, column 9, line 60 -column 10, line 19. 1-methyl-3,5-diethyl-2,4-diaminobenzene or any mixture of this compound with up to 40% by weight, based on the mixture, of 1-methyl-3,5-diethyl-2,6-diaminobenzene is preferably used as aromatic diamine component c). Preferably the compounds which are used as component b) and as component c) are selected so that homogeneous solutions of component c) in component b) may be prepared at room temperature. Component c) is generally used in an amount of from 1 to 50% by weight based on the weight of component b). Preferably component c) consists of aromatic diamines in an amount of 5 to 50, preferably 10 to 20% by weight, based on the weight of component b) or of a mixture of such an amount of aromatic diamines with polyols of the kind exemplified hereinbefore said polyols being present in an amount of from 0,5 -10, preferably of from 1 to 5% by weight, based on the weight of component b).

Component d) comprises finely divided mica having a weight-average flake diameter of less than 50 μm preferably of from 10 to 40 μm. The mica has preferably a "weight-average aspect ratio" of at least 20. The "weight-average aspect ratio" is the quotient obtained by dividing the weight-average flake diameter by the average flake thickness. The mica is generally used in an amount of less than 30% by weight, preferably in an amount of from about 5 to about 25% by weight, based on the total weight of all starting materials.

In addition to said mica component d) may also comprise the usual reinforcing agents exemplified hereinbefore, although it is preferred to use said mica as only reinforcing agent d).

Component e) which may optionally be present in the reaction mixture comprises catalysts such as those disclosed in US-Patent 4 218 543, column 10, line 26 -column 11, line 18. The catalysts are optionally used in a quantity of up to 10% by weight, preferably of up to 1% by weight, based on the weight of component b).

Further additives and auxiliaries which may optionally be present in the reaction mixture are, for example, those mentioned in US-Patent 4 218 543, column 11, line 31 -column 12, line 19.

When carrying out the process of the invention components b), c), d) and optionally e) are preferably homogeneously mixed to form the "polyol-component".

It is, however, also possible to add some or all of components d) and optionally e) to the polyisocyanate component a) provided said components do not react with isocyanate groups.

The process is carried out according to the reaction injection moulding technique (RIM process) in accordance with the teaching of US-Patent 4 218 543 component a) and the "polyol-component" mentioned hereinbefore representing the reactants to be reacted with each other. The relative amounts of said reactants correspond to an isocyanate index of from 70 to 130, preferably of from 90 to 110. By "isocyanate index" is meant the quotient obtained by dividing the number of isocyanate groups by the number of groups which are reactive with isocyanates multiplied by 100.

The quantity of reactants filled into the mould resp. the amount of blowing agents which may be used (as part of component e)) is selected so that the resulting mouldings exhibit a density of from 0,8 to 1,4 g/cm³ preferably of from 0,9 to 1,2 g/cm³.

A starting temperature of from 10 -50°C, preferably from 20 to 45°C, is generally chosen for the mixture introduced into the mould. The temperature of the mould itself is generally from 40 -100°C, and preferably from 50 -90°C.

The following examples and comparison examples all "parts" relate to parts by weight.

Examples

Example 1

82 parts of a branched polyether polyol having a hydroxyl number of 28 (corresponding to a molecular weight of 6000), obtained by propoxylation of glycerol with subsequent ethoxylation of the propoxylation product (weight ratio PO:EO = 85:15), 2 parts of a branched polyether polyol having a hydroxyl number of 630 (corresponding to a molecular weight of 355), obtained by propoxylation of a mixture of 80 parts of 2,4-diaminotoluene and 20 parts of 2,6-diaminotoluene, 16 parts of a mixture of 80 parts of 1-methyl-3,5-diethyl-2,4-diaminobenzene and 20 parts of 1-methyl-3,5-diethyl-2,6-diaminobenzene, 0,1 parts of dibutylin dilaurate and 17 parts of mica having an weight average flake diameter of 20 μm and a weight-average aspect ratio of about 30 were homogeneously mixed to form a "polyol-component". This "polyol-component" was stored for 2 days but no deposition of mica was observed.

The polyol-component was then processed by the reaction injection moulding process with 47 parts of an urethane-modified diphenylmethane diisocyanate containing 23% by weight of isocyanate groups which was obtained by reacting 4,4'-diisocyanatodiphenylmethane with tripropyleneglycol. A sheet mould 350 x 1100 x 3 mm in size was used the inner surfaces of which were coated with a commercial wax type mould release agent ("mould release agent D-186" of Chukyo Yushi, Japan). The temperature of the mould was kept at 75-80°C, the temperature of the reactants prior to filling the mould was 40°C. The moulding was demoulded after a mould residence time of 40 seconds and thereafter stored for 60 minutes at 120°C.

The density of the moulding was 1,1 g/cm³. In the parallel direction with the flow of the injected reactants the bending modulus according to Japanese standard JIS K 6911 was 310 MPa the tensile strength according to JIS K 6301 was 16 MPa, the ultimate elongation (JIS K 6301) was 280%, the coefficient of linear thermal expansion was 110 x 10⁻⁵/°C, the Izod impact value (with notch) (JIS K 6911) was 45 kg x cm/cm². In the perpendicular direction to the flow the bending modulus was 270 MPa, the tensile strength 16 MPa, the ultimate elongation 290%, the coefficient of linear thermal expansion 120 x 10⁻⁵/°C, the Izod impact value (with notch) 40 kg x cm/cm². As to be seen the difference of physical properties between the direction to the flow was quite small.

The surface quality of the mouldings was fair and the maximum height measured with aid of a surface roughness meter (R max) was 2,6 μm.

Example 2

Example 1 was repeated with the only exception that 37 parts of said mica were used. The density of the moulding was 1,1 g/cm³. In the parallel direction with the flow the bending modulus was 550 MPa, the tensile strength 15 MPa, the ultimate elongation 240%, the coefficient of linear thermal expansion 75 x 10⁻⁵/°C, the Izod impact value (with notch) 33 kg x cm/cm². Rmax was 3,1 μm.

Comparison Example 1

Example 1 was repeated with the only exception that no mica was used. The density of the moulding was 1,1 g/cm³. In the parallel direction with the flow the bending modulus was 220 MPa, the tensile strength 23 MPa, the ultimate elongation 280%, the coefficient of linear thermal expansion 170 x 10⁻⁵/°C, the Izod impact value (with notch) 57 kg x cm/cm². Rmax was 2,6 microns.

Comparison Example 2

Example 1 was repeated with the only exception that 17 parts of mica having a weight-average flake diameter of about 90 μm and a weight-average aspect ratio of about 50 were used. The density of the moulding was 1,1 g/cm³. In the parallel direction with the flow the bending modulus was 290 MPa, the tensile strength 12 MPa, the ultimate elongation 190%, the coefficient of linear thermal expansion 110 x $10^{-5}$/°C, the Izod impact value (with notch) 35 kg x cm/cm². Rmax was 6,4 $\mu$m.

## Comparison Example 3

Example 1 is repeated with the only exception that 17 parts of milled glass fibre (200 $\mu$m long and 10 $\mu$m in diameter) were used as reinforcing material instead of mica. The glass fibres were homogeneously dispersed in the polyol-component. Upon storage for 8 hours the glass fibres precipitated from the polyol-component and were difficult to be dispersed again.

The moulding had a density of 1,1 g/cm³. The physical properties in parallel direction with the flow and in perpendicular direction to the flow were as follows:

Bending modulus: 520/280 MPa, tensile strength, 18/17 MPa, ultimate elongation, 150/190%, coefficient of linear thermal expansion 75 x $10^{-5}$/150 x $10^{-5}$/°C, Izod impact value (with notch) 40/38 kg x cm/cm². Rmax was 8.1 $\mu$m.

## Comparison Example 4

Example 1 is repeated with the only exception that 17 parts of glass flakes (about 95 of weight-average flake diameter and about 30 of weight-average aspect ratio) were used as reinforcing material. Upon storage for 1 day a deposition of glass flake in the polyol component was observed.

The sheet mouldings having a density of 1,1 g/cm³ had the following properties in the parallel direction with the flow:

Bending modulus: 240 MPa, tensile strength, 13 MPa, ultimate elongation 200%, coefficient of linear thermal expansion 125 x $10^{-5}$/°C, Izod impact value (with notch) 25 kg x cm/cm². Rmax was 6,2 $\mu$m.

From the above examples and comparison examples it can be concluded that mica having a flake diameter of less than 50 $\mu$m shows a pronounced reinforcement effect and leads to no remarkable decrease of the impact strength because the aspect ratio of mica is large compared with that of glass flakes. Furthermore, the use of such mica leads to an excellent surface quality of the mouldings. Mica of larger flake diameter has a larger aspect ratio but the reinforcement effect is not proportionate to the flake diameter. Larger flakes usually cause a deteriorated surface quality. A further advantage of mica is to be seen in the fact that it is readily dispersible in the polyol-component without formation of any precipitates so that handling of the raw material systems using mica is easy compared to raw materials which contain glass fibres as reinforcing material.

## Claims

1. A process for the production of polyurethane elastomer mouldings having a compact surface skin and a density of from 0,8 to 1,4 g/cm³ by reacting a reaction mixture comprising

a) a polyisocyanate component,

b) organic compounds containing at least two isocyanate-reactive groups and having a molecular weight of from 800 to 12,000,

c) organic compounds containing at least two isocyanate-reactive groups and having a molecular weight of from 62 to 500,

d) inorganic reinforcing materials, and optionally,

e) further additives and auxiliaries known in polyurethane chemistry

in closed moulds following the reaction injection method, characterised in that mica having a weight-average flake diameter of less than 50 $\mu$m is used as component d) or as a part of component d).

2. The process of claim 1, characterised in that said mica is used in an amount of from about 5 to about 25 % by weight, based on the total weight of the reaction mixture.

3. The process of claim 1, wherein component a) consists of polyisocyanates based on 4,4'-diisocyanatodiphenylmethane which are liquid at room temperature.

4. The process of claim 1, wherein component b) is a polyetherpolyol or a mixture of polyetherpolyols having an (average) molecular weight of from 3000 to 8000 and containing of from 2 -4 hydroxyl groups.

5. The process of claim 1, wherein component c) is selected from the groups consisting of polyhydroxyl compounds containing from 2 -4 hydroxyl groups, aromatic diamines containing at least one alkyl substituent having from 1 to 4 carbon atoms in the ortho-position to a first amino group and two alkyl substituents having from 1 to 4 carbon atoms in the ortho positions to a second amino group and mixtures thereof.

6. The process of claim 5, wherein component c) is used in an amount of from 1 to 50 % by weight, based on the weight of component b).

7. The process of claim 1, wherein component e) comprises a catalyst for the reaction between hydroxyl groups and isocyanate groups.

8. Mouldings obtained according to the process of claim 1.